(19) Europäisches Patentamt
European Patent Office
Office européen des brevets

(11) Veröffentlichungsnummer: **0 462 437 B1**

(12) # EUROPÄISCHE PATENTSCHRIFT

(45) Veröffentlichungstag der Patentschrift: **15.02.95**

(51) Int. Cl.$^{6}$: **C09B 23/14**, C08K 5/42, C09K 19/60

(21) Anmeldenummer: **91108985.2**

(22) Anmeldetag: **01.06.91**

(54) **Neue lichtpolarisierende Filme oder Folien und Farbstoffe zu ihrer Herstellung.**

(30) Priorität: **16.06.90 DE 4019309**

(43) Veröffentlichungstag der Anmeldung:
**27.12.91 Patentblatt 91/52**

(45) Bekanntmachung des Hinweises auf die Patenterteilung:
**15.02.95 Patentblatt 95/07**

(84) Benannte Vertragsstaaten:
**BE CH DE FR GB IT LI NL SE**

(56) Entgegenhaltungen:
**CH-A- 532 106**
**DE-A- 2 201 857**
**DE-C- 952 658**
**FR-A- 1 583 595**

(73) Patentinhaber: **BAYER AG**
**D-51368 Leverkusen (DE)**

(72) Erfinder: **Claussen, Uwe, Dr.**
**Am Wasserturm 15b**
**W-5090 Leverkusen 3 (DE)**
Erfinder: **Kröck, Friedrich Wilhelm, Dr.**
**Ackerstrasse 45**
**W-5068 Odenthal-Glöbusch (DE)**

**EP 0 462 437 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft lichtpolarisierende Filme enthaltend wasserlösliche, transparente, organische Polymere und dichroitische, fluoreszenzfähige Farbstoffe mit wasserlöslichmachenden funktionellen Gruppen, sowie neue dichroitische Farbstoffe.

Filme auf Basis von Polyvinylalkohol (PVAL), die Iod oder dichroitische Farbstoffe als polarisierende Agentien enthalten, sind bekannt.

Technische Verwendung haben bislang allein die Iod-haltigen Polarisatoren gefunden, die beispielsweise in den passiven Flüssigkristall-Displays zur Sichtbarmachung der Information eingesetzt werden. Bei Abwesenheit von Feuchtigkeit kennzeichnen diese Filme eine ausgezeichnete Lichtechtheit und hervorragende dichroitische Eigenschaften im langwelligen Bereich des sichtbaren Spektrums. Das wirksame Agens dieser Filme ist der Iod-PVAL/Komplex (M.M. Zwick, J. Appl. Polym. Sci.; 9 2393-2424 (1965)), der das Tageslicht zwar breitbandig, aber nicht vollständig absorbiert. Im kurzwelligen (orange-gelben) Bereich des Spektrums liegt ein Bereich verminderter Extinktion, weswegen die Folien eine blaue Eigenfarbe zeigen.

Dies hat nachteilige Folgen, wenn man nach dem Durchgang durch die Folie weißes Licht erhalten will. Das unpolarisiert durchgelassene Licht vermindert den Dichroismus und damit die Polarisationsleistung in diesem Bereich. Zur Steigerung des Dichroismus ist man gezwungen, die Konzentration an Iod-Komplex zu erhöhen. Diese Korrektur im kurzwelligen Bereich zieht aber eine übermäßige Extinktion im langwelligen Bereich nach sich. Die Folge ist eine deutliche Schwächung des durchgelassenen Lichts in der Durchgangsstellung. Eine optische Anzeige, die mit dieser Folie bestückt wird, ist in ihrer Helligkeit vermindert. Um zu vertretbaren Helligkeiten zu gelangen, muß man Kompromisse schließen.

Eine wichtige kritische Meßgröße einer universal verwendbaren optischen Anzeige ist die Ablesbarkeit bei verschiedenen Beleuchtungsverhältnissen, sie wird üblicherweise als "Perceived contrast ratio" (PCR = Transmission in Durchgangsstellung (T$\parallel$) Transmission in Sperrstellung (T$\perp$)) angegeben. Aus diesem folgt, daß die Transmission einerseits in der Sperrstellung (T$\perp$) so klein wie möglich (Ablesbarkeit bei Dunkelheit), andererseits in der Durchgangsstellung (T$\parallel$) so groß wie möglich (Ablesbarkeit bei Helligkeit) gemacht werden muß. Dies erfordert eine ganz gleichmäßige, möglichst hohe Polarisationsleistung des Filters über den gesamten Bereich des sichtbaren Spektrums, welche mit der Iodfolie prinzipiell nicht erreicht werden kann.

Die Vielfalt der Stoffe und Eigenschaften, und deren hohes technisches Niveau, haben bisher verhindert, eine Polarisationsfolie bereitstellen zu können, deren Chromophor nicht Iod oder ein Iod-Komplex ist, obgleich diese deutliche Vorteile in der Beständigkeit gegen Feuchtigkeit und Wärme hätte. Die Versuche, auf der Basis von Farbstoffen eine Polfolie herzustellen, verlangt eine Gamme gut abgestimmter Farbstoffe.

Die Wirkungsweise einer Polfolie und die zugrunde liegenden physikalischen Prinzipien und auch die strukturellen Voraussetzungen dafür in der Matrix sind z.B. aus US 4 440 451 bekannt.

Farbstoffe können das absorbierte Licht auch wieder als Strahlungsenergie emittieren. Sie geben das aufgenommene Licht in Form einer Fluoreszenz genannten Strahlung wieder ab. Falls die Lichtaufnahme eines Farbstoffs dichroitisch ist, sollte es die Emission auch sein. Nun ist aber bekannt, daß sich eine polarisierte Fluoreszenz nicht nachweisen ließ (N.V. Platonova, K.R.Popov, CA 90(26):205753c), obgleich später gezeigt wurde, daß die verwendeten Farbstoffe unter den angewendeten Bedingungen sehr wohl orientierbar waren (Y.Matsuoka, K. Yamaoka, Bull. Chem. Soc. (Japan), 52(11), 3163(1979). Mithin bedeutet das Vorhandensein einer durch Absorption nachgewiesenen Ordnung nicht gleichzeitig das Auftreten einer polarisierten Fluoreszenz.

Wir haben nun überraschend gefunden, daß bestimmte fluoreszenzfähige Farbstoffe hervorragende dichroitische Eigenschaften sowohl in Absorption als auch in Emission aufweisen und sich sehr gut zur Herstellung von lichtpolarisierenden Filmen oder Folien eignen.

Die Erfindung betrifft somit lichtpolarisierende Filme oder Folien, enthaltend organische, wasserlösliche Polymere und einen oder mehrere Farbstoffe, die in Form der freien Säure der allgemeinen Formel (I)

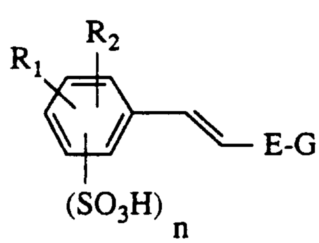

(I)

entsprechen, in der

G Wasserstoff oder den Rest Y

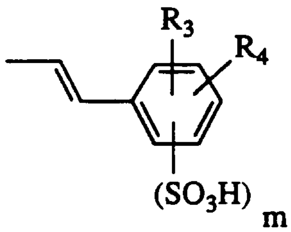

(Y)

bedeutet und in der,
wenn G Wasserstoff bedeutet, E für einen gegebenenfalls substituierten aromatischen Rest steht,
wenn G den Rest Y bedeutet, E für einen Rest $(-C_6H_4-)_p$, wobei p für die Zahlen 1, 2 oder 3, bevorzugt für 2, steht,
oder die Gruppe

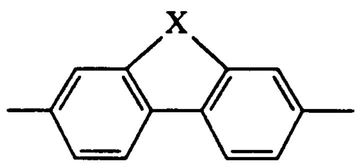

steht,
in der

X für zwei H-Atome oder einen überbrückenden Rest $-CH_2-$, $-CH_2-CH_2-$ oder -O- steht,
und der gegebenenfalls durch mindestens eine Sulfonsäuregruppe substituiert ist,
die Reste $R_1$ bis $R_4$ unabhängig voneinander gleich oder verschieden Wasserstoff, Alkyl, Trifluormethyl, Alkoxy, Aralkoxy, Alkylenoxy, die Gruppe NRR' mit R = R' oder Wasserstoff, R' = niederes Alkyl, Acyl, Sulfonyl oder einen über N- oder C-gebundenen, heterocyclischen 5- oder 6-gliedrigen Ring, Halogen, die Carboxy-, Cyan-, Alkylsulfon-, Arylsulfon-, Carbonamid-, Sulfonamid- oder die Carbonsäureestergruppe bedeuten oder $R_1$ und $R_2$ bzw. $R_3$ und $R_4$ gemeinsam für einen annellierten Benzolring stehen,
m und n unabhängig voneinander die Zahlen 0, 1 oder 2 bedeuten, mit der Maßgabe, daß wenn m und n für 0 stehen, der Rest E mindestens eine Sulfonsäuregruppe enthält und worin der Rest E weiter substituiert sein kann.

Als Sustituenten für den Rest E seien beispielsweise genannt: $C_1$-$C_5$-Alkylreste, die durch Hydroxy, Cyan, Halogen oder Phenyl weiter substituiert oder durch O unterbrochen sein können, wie Methyl, Ethyl, Cyanethyl, tert-Butyl, Benzyl, Halogenatome wie Chlor, Brom oder Fluor, vorzugsweise Chlor, $C_1$-$C_5$-Alkansulfonylreste wie Methansulfonyl, Ethansulfonyl, n-Butansulfonyl, $\beta$-Hydroxy-ethansulfonyl, der $\omega$-Toluolsulfonylrest, der Benzolsulfonylrest, gegebenenfalls durch $C_1$-$C_4$-Alkylreste, mono- oder disubstituierte Carbonamid- oder Sulfonamidgruppen sowie Carbonsäure-$C_1$-$C_4$-alkylestergruppen.

Geeignetes Alkyl $R_1$-$R_4$ ist insbesondere $C_1$-$C_2$-Alkyl, geeignetes Alkoxy $R_1$-$R_4$ ist insbesondere $C_1$-$C_2$-Alkoxy, geeignetes Aralkoxy $R_1$-$R_4$ ist insbesondere Benzyloxy, geeignetes Alkenyloxy $R_1$-$R_4$ ist insbesondere $C_2$-$C_4$-Alkylenoxy. Unter Alkylsulfonyl $R_1$-$R_4$ wird bevorzugt $C_1$-$C_4$-Alkylsulfonyl, unter Arylsulfonyl $R_1$-$R_4$ bevorzugt Phenylsulfonyl verstanden. Die Carbonamid- und Sulfoamidgruppen $R_1$-$R_4$ können durch $C_1$-$C_4$-Alkylreste mono- oder disubstituiert sein. Unter Carbonsäureestergruppen $R_1$-$R_4$ werden vorzugsweise die $C_1$-$C_4$-Alkylester verstanden.

Bevorzugt sind Farbstoffe der Formel (II)

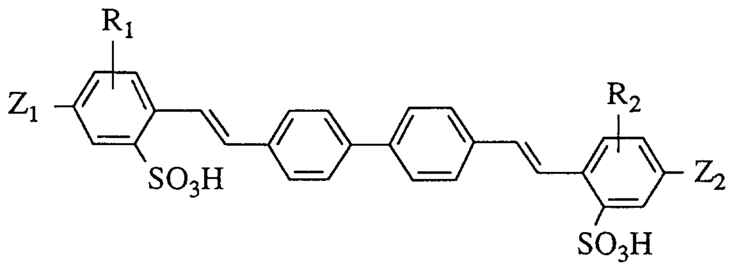

(II)

in der $Z_1$, $Z_2$ unabhängig voneinander für das Wasserstoff-Atom, den Rest Cl, N-Acyl, N-Alkyl, einen über N gebundenen Rest oder die Gruppe $-C_6H_4SO_3H$ steht. Der heterocyclische Rest ist vorzugsweise der Triazolylrest.

Farbstoffe dieser Konstitution sind zum Teil bekannt, beispielsweise aus den Schweizer Patentschriften 554 821, 505 036 und den deutschen Offenlegungsschriften 22 09 221, 22 62 531, 22 01 857, 23 25 302, 23 32 089, 23 37 845, 27 00 292.

DE-C-952 658 beschreibt ein Verfahren zur Herstellung von fluoreszierenden Textilfarbstoffen, die Triazolreste enthalten.

Der Dichroismus dieser Farbstoffe ist bisher nicht bekannt. Überraschenderweise ist er sehr hoch.

Die Farbstoffe mit $Z_1$, $Z_2$ = N-Acyl, N-Alkyl oder Triazolyl sind neu. Gegenstand der Erfindung sind somit ferner Farbstoffe der Formel (I), in der $R_1$, $R_2$, $R_3$, $R_4$ unabhängig voneinander den Rest NRR' oder Wasserstoff, mindestens zwei Reste $R_1$, $R_2$, $R_3$ und $R_4$ aber den Rest NRR' bedeuten, wobei R = R' oder H bedeutet und R' einen Acyl- oder Alkylrest bedeutet, in der ferner

G einen Rest Y

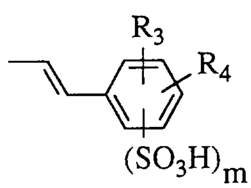

(Y)

bedeutet und

m, n und E die oben für Formel (I) angegebene Bedeutung haben.

Man stellt sie nach den bekannten Methoden aus den entsprechenden Aminen oder Diaminen her, die ihrerseits beipielsweise aus der Kondensation der literaturbekannten 4-Nitro-benzaldehyd-2-sulfonsäure mit einem Phosphonat und anschließender Reduktion der Nitrogruppe zugänglich sind.

Bei dem organischen Polymer handelt es sich vorzugsweise um ein transparente Filme bildendes orientiertes Polymer, das mit saure Gruppen enthaltenden Farbstoffen verträglich ist. Beispiele für solche Polymer sind: Polyamide, Cellulose(acetat), Vinylalkoholhomo und -copolymere sowie Vinylacetathomo- und -copolymere, wobei als Comonomere z.B. Ethylen, Propylen, Crotonsäure, (Meth)Acrylsäure, Maleinsäure vorliegen können. Bevorzugt eingesetzt werden Polyvinylalkohole, die durch vollständige oder teilweise Verseifung von Folyvinylacetat hergestellt worden sind, insbesondere Typen, die in 4 %iger wäßriger Lösung eine Viskosität >4 mPa.s, vorzugsweise 35 bis 70 mPas, bei 20 °C und einen Verseifungsgrad >80 Mol-%, vorzugsweise 85 bis 100 Mol-%, aufweisen.

Die Filme enthalten vorzugsweise 0,005 bis 5 Gew.-%, besonders bevorzugt 0,05 bis 3 Gew.-% Farbstoffe, bezogen auf 100 Gew.-% Filmgewicht.

Die Einfärbung der Filme geschieht auf bekannte Weise, beispielsweise durch Einfärben der in Wasser gelösten Polymeren. Aus der Lösung wird der Film in an sich bekannter Weise hergestellt, indem man einen Rohfilm von 5 bis 150 µm, vorzugsweise 20 bis 50 µm, Dicke herstellt und diesen bei einer Temperatur zwischen 60 bis 180 °C, vorzugsweise 100 bis 150 °C, um 300 bis 1.000 % streckt.

Es empfiehlt sich, die Farbstoffe oder Farbstoffsalze vor ihrem Einsatz, z.B. durch Umkristallisieren, Extraktion und/oder Dialyse von Fremdsalzen zu befreien.

Gewünschtenfalls können die farbstoffhaltigen Filme auch einer Nachbehandlung, z.B. mit wäßriger Borsäurelösung, zwecks Verbesserung der Feuchtebeständigkeit oder der Lichtdurchlässigkeit unterworfen werden. Die Bedingungen unter denen diese Nachbehandlung durchgeführt wird, können unabhängig vom Filmmaterial und Farbstoff schwanken. Vorzugsweise arbeitet man mit einer 1 bis 15 gew.-%igen, besonders bevorzugt 5 bis 10 gew.-%igen, Borsäurelösung bei 30 bis 80 °C, besonders bevorzugt bei 50 bis 80 °C. Vorzugsweise setzt man der Borsäurelösung Tenside und gegebenenfalls anorganische Salze zu. Die Tenside können nicht-ionisch, kationisch oder anionisch sein, bevorzugt sind sie nicht-ionisch.

Beispiele für nicht-ionische Tenside sind: Additionsprodukte von Ethylenoxid an höhere Alkohole oder Phenole, beispielsweise Nonylphenol. Vorzugsweise verwendet man, bezogen auf Wasser, 0,005 bis 0,5 Gew.-%, besonders bevorzugt 0,02 bis 0,2 Gew.-%, Tensid. Als anorganische Salze kommen vorzugsweise Na-Sulfat, und weiterhin K-Sulfat, Na-Chlorid, KCl, Na-Nitrat in Betracht. Bezogen auf Wasser werden vorzugsweise 0,1 bis 5 Gew.-%, besonders bevorzugt 0,3 bis 3 Gew.-% anorganische Salze eingesetzt. Gewünschtenfalls kann noch eine Fixierungsbehandlung mit einer wäßrigen Lösung einer hochmolekularen kationischen Verbindung vorgenommen werden.

Der Dichroismus des Systems läßt sich durch Zusätze niederer ein- oder mehrwertiger Alkohole wie Methanol, Ethanol oder Glykol, Glyzerin, Trimethylolethan, Trimethylolpropan, Pentaerythrit, Sorbit, deren Ether wie Glykolmonomethylether, Glykolmonoethylether, Glykoldimethylether, niederen Hydroxyaminen wie Fropanolamin oder Amiden wie DMF, N-Methylpyrrolidon, Pyrrolidon, $\epsilon$-Caprolactam zur Gießlösung beträchtlich verstärken. Dei Additive können allein oder vorteilhafter, in Mischungen eingesetzt werden, wobei als Mischungsbestandteile auch niedrige einwertige Alkohole, z.B. Methanol, Ethanol, i-Propanol auftreten können.

Die Additive werden der Gießlösung vorzugsweise in Mengen zugesetzt, die 5 bis 50 Gew.-%, bezogen auf 100 Gew.-% der Gießlösung, ausmachen.

Zusätzlich können oberflächenaktive Verbindungen zur Steuerung der Oberflächenspannung eingesetzt werden. Geeignete oberflächenaktive Verbindungen sind beispielsweise Sulfonsäuren, wie Alkansulfonsäuren, insbesondere Sulfobernsteinsäure-octylester. Perfluoralkansulfonsäuren, insbesondere Perfluoroctansulfonsäure und ihr Tetraalkylammoniumsalz, beispielsweise das Tetraethylammoniumsalz, Sulfate, insbesondere sulfatierte Alkylphenolpolyglykolether oder Alkylsulfonate, amphotere Tenside, insbesondere Alkanamidopropylbetäine, beispielsweise Lauramidopropylbetain oder die in CA mit den folgenden REG-Nrn. aufgeführten Verbindungen: 73772-45-9, 96565-37-6, 4292-10-8, 59272-84-3, 25729-05-9, 6179-44-8, 21244-99-5, 58793-79-6, 32954-43-1, 92836-76-5 oder nichtionische Tenside wie 4-Octylphenolpolyglykolether.

Die lichtpolarisierenden Filme oder Folien können in an sich bekannter Weise mit anderen doppelbrechungsfreien Materialien compoundiert oder laminiert werden. Als Schutzüberzug eignen sich z.B. Folien aus einem Tetrafluorethylen-hexafluorethylen-Copolymer oder einem anderen Fluorkohlenwasserstoff-Harz, einem Polyester-, Polyolefin- oder Polyamid-Harz, einem Polycarbonat oder Celluloseester, vorzugsweise -(tri)acetat, -propionat oder -butyrat.

Die erfindungsgemäßen Filme oder Folien finden Verwendung als Polarisationsfilter, zum Erzeugen linearpolarisierten Lichts, zum Sichtbarmachen geordneter Strukturen in der Analytik von Polymeren und in biologrschem Material.

Beispiele

Beispiel 1

0,03 g des salz- und stellmittelfreien Farbstoffs der Formel

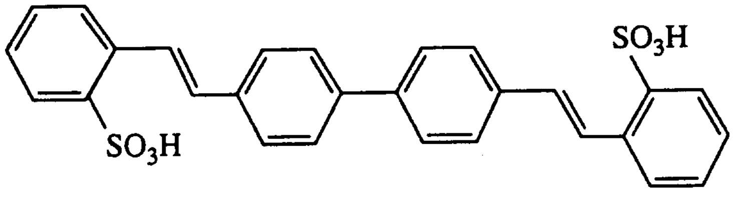

löst man bei 80 °C unter Rühren in 190 g entmineralisiertem Wasser, löst darin 9,97 g Mowiol 28-99 (verseiftes Polyvinylacetat; Verseifungsgrad 99,4 ± 0,4 Mol-%; Viskosität der 4 %igen Lösung bei 20 °C

(DIN 53 015) = 28 ± 2 mPas; Hersteller Hoechst AG) und versetzt dann 92,5 g dieser Lösung mit 2,5 g Glycerin und 5 g Methanol.

Die erhaltene Gießlösung wird mit einem Rakel auf einer Glasplatte in einer 500 µm dicken Schicht aufgezogen. Nach dem Trocknen bei Raumtemperatur wird die so gewonnene Folie von der Unterlage abgelöst, darin 15 Minuten bei 130 °C temperiert und bei dieser Temperatur mit einer Geschwindigkeit von 10 cm/min auf ca. 700 % ihrer ursprünglichen Länge monoaxial verstreckt. Die Folie zeigt im Extinktionsmaximum bei 371 nm mit polarisiertem Licht ein maximales Kontrastverhältnis von 16,5.

Beispiel 2

0,06 g des salz- und stellmittelfreien Farbstoffs wie in Beispiel 1 löst man in 100 g Wasser heiß auf. Dazu gibt man 10 g Glycerin und trägt in die erkaltete Lösung 19,9 g Mowiol 28-99 unter Rühren ein. Nach 1 Stunde Rühren bei Raumtemperatur erhitzt man auf 90 °C und rührt solange bei dieser Temperatur, bis nach ca. 3 Stunden eine homogene Lösung entstanden ist. Bei 50 °C rührt man dann 5 g Methanol ein. Die warme Lösung wird durch eine Filterpresse unter Aufpressen von Luft filtriert und dann im Ultraschallbad entgast. Zur Erzeugung einer Folie wird die Gießlösung mit einem 250 µm Rakel auf die ca. 50 °C vorgewärmte Gießtrommel (Trommeldurchmesser 25 cm, Umlaufgeschwindigkeit ca 7,5 U/min) kontinuierlich aufgetragen. Die Schicht wird durch Überleiten von erhitzter Luft getrocknet und die verfestigte Folie von der Trommel kontinuierlich abgezogen und nachgetrocknet. Die erhaltene Folie ist 40 µm dick. Sie wird wie zuvor beschrieben gereckt, wobei man ähnliche dichroitische Ergebnisse erhält.

Beispiele 3 bis 7

Man verfährt wie in Beispiel 1 angegeben, verwendet aber die in der Tabelle angegebenen Substanzen, wobei die in der Spalte CR verzeichneten Extinktionsverhältnisse erhalten werden.

Für den Fall $G = Y$, $R_2 = R_4 = H$, Sulfonsäuregruppe in 2-Stellung.

| Beispiele | Reste: $R_1 = R_3$ | Rest: E | Dichroitisches Verhältnis CR |
|---|---|---|---|
| 3 | 4-Cl | 4,4'-Biphenyl | 10,7 |
| 4 | H | 2,5-Dichlorphenyl | 11,8 |
| 5 | H | 4,4'-Biphenyl-3,3'-disulfonsäure | 14,7 |
| 6 | 3-$CH_3$ | 4,4'-Biphenyl | 13,5 |
| | Für den Fall $G = H$, $R_2 = H$ | | |
| 7 | 4-CN | 4-Biphenyl-4'-sulfonsäure | 14,7 |

**Patentansprüche**

1. Lichtpolarisierende Filme oder Folien, enthaltend organische, wasserlösliche Polymere und einen oder mehrere Farbstoffe, die in Form der freien Säure der allgemeinen Formel (I)

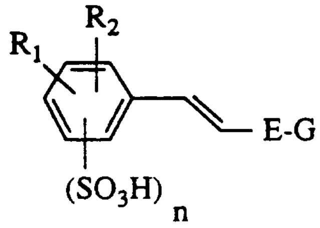

(I)

entsprechen, in der

G Wasserstoff oder den Rest Y

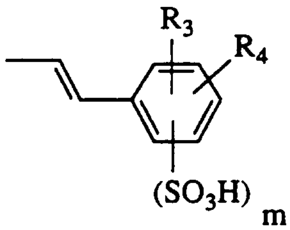

(Y)

bedeutet und in der,

wenn

G Wasserstoff bedeutet, E für einen gegebenenfalls substituierten aromatischen Rest steht,

wenn

G den Rest Y bedeutet, E für einen Rest $(-C_6H_4-)_p$, wobei p für die Zahlen 1, 2 oder 3 steht, oder die Gruppe

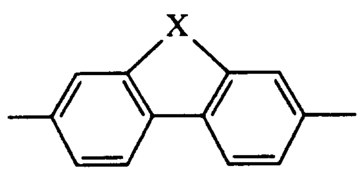

steht,

in der

X für zwei H-Atome oder einen überbrückenden Rest $-CH_2-$, $-CH_2-CH_2-$ oder -O- steht, und der gegebenenfalls durch mindestens eine Sulfonsäuregruppe substituiert ist,

die Reste

$R_1$ bis $R_4$ unabhängig voneinander gleich oder verschieden Wasserstoff, Alkyl, Trifluormethyl, Alkoxy, Aralkoxy, Alkylenoxy, die Gruppe NRR' mit R = R' oder Wasserstoff, R' = niederes Alkyl, Acyl, Sulfonyl oder einen über N- oder C-gebundenen, heterocyclischen 5- oder 6-gliedrigen Ring, Halogen, die Carboxy-, Cyan-, Alkylsulfon-, Arylsulfon-, Carbonamid-, Sulfonamid- oder die Carbonsäureestergruppe bedeuten oder $R_1$ und $R_2$ bzw. $R_3$ und $R_4$ gemeinsam für einen annellierten Benzolring stehen,

m und n unabhängig voneinander die Zahlen 0, 1 oder 2 bedeuten, mit der Maßgabe, daß wenn m und n für 0 stehen, der Rest E mindestens eine Sulfonsäuregruppe enthält und worin der Rest E weiter substituiert sein kann.

**2.** Filme oder Folien nach Anspruch 1, die als organisches Polymer Polyamide, Celluloseacetat, Vinylalkoholhomo- und -copolymere oder Vinylacetathomo- und -copolymere enhalten.

3. Filme oder Folien nach Anspruch 1, die als organisches Polymer Polyvinylalkohole enthalten, die durch vollständige oder teilweise Verseifung von Polyvinylacetat hergestellt worden sind.

4. Filme oder Folien nach Anspruch 3 mit Polyvinylalkoholen, die einen Verseifungsgrad >80 Mol-% und eine Viskosität von größer als 4 mPas bei 20 °C aufweisen.

5. Filme oder Folien nach Anspruch 1, die als Farbstoffe solche der Formel (II)

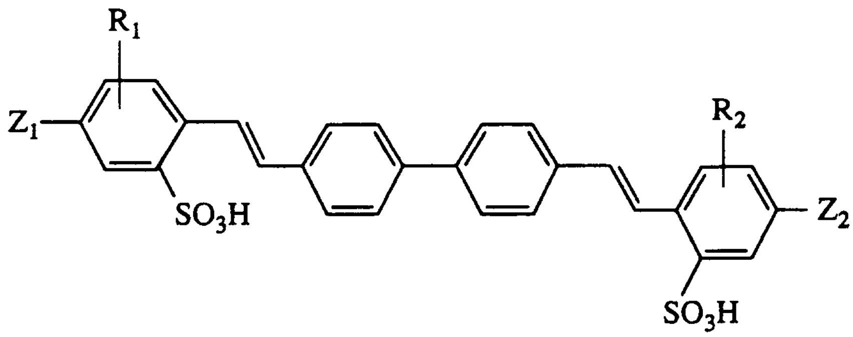

(II)

enthalten,
in der $Z_1$, $Z_2$ unabhängig voneinander für das Wasserstoff-Atom, den Rest Cl, N-Acyl, N-Alkyl, einen über N gebundenen Rest oder die Gruppe $-C_6H_4SO_3H$ steht,
und in der $R_1$, $R_2$ unabhängig voneinander gleich oder verschieden Wasserstoff, Alkyl, Trifluormethyl, Alkoxy, Aralkoxy, Alkenoxy, die Gruppe NR'R worin R den Rest R' oder Wasserstoff bedeutet und R', gegebenenfalls auch zusammen mit R, einen heterocyclischen 5- oder 6-gliedrigen Ring, Halogen, die Carboxy-, Cyan, Alkylsulfon-, Arylsulfon-, Carbonamid-, Sulfonamid- oder die Carbonsäureestergruppe bedeutet.

6. Filme oder Folien gemäß Anspruch 1, die bezogen auf 100 Gew.-% Filmgewicht von 0,005 bis 5 Gew.-% Farbstoffe wie in Anspruch 1 genannt enthalten.

7. Filme oder Folien nach Anspruch 1, die bei einer Temperatur zwischen 60 und 180 °C und 300 bis 1.000 % gestreckt sind.

8. Verwendung der Filme oder Folien gemäß Anspruch 1 bis 7 als Polarisationsfilter.

9. Verwendung der Farbstoffe die in Form der freien Säure der allgemeinen Formel (I) in Anspruch 1 entsprechen, in der $R_1$ bis $R_4$, E, G, X, Y, n und m die in Anspruch 1 genannte Bedeutung haben, als dichroitische Chromophore.

10. Farbstoffe der allgemeinen Formel (I)

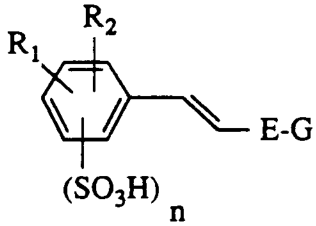

(I)

in der
G einen Rest Y

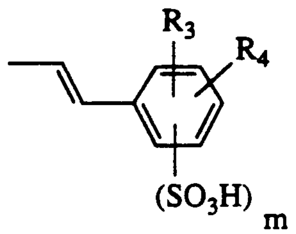

(Y)

$R_1$, $R_2$, $R_3$ und $R_4$ unabhängig voneinander den Rest NRR' oder Wasserstoff, mindestens zwei der Reste $R_1$, $R_2$, $R_3$ und $R_4$ aber den Rest NRR', bedeuten, indem R = R' oder Wasserstoff bedeutet und R' einen Acyl- oder Alkylrest bedeutet, und

m, n und E die in Anspruch 1 für Formel (I) angegebene Bedeutung haben.

## Claims

**1.** Light-polarising films or foils which contain organic, water-soluble polymers and one or more dyes which, in the form of the free acids, correspond to the general formula (I)

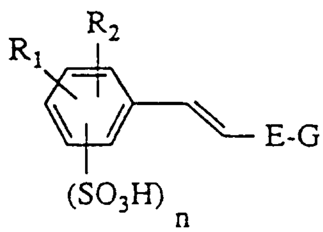

(I)

in which

G represents hydrogen or the group Y

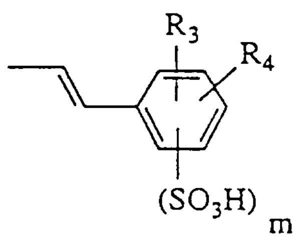

(Y)

and in which

if

G represents hydrogen, E represents an optionally substituted aromatic group,

if

G represents the group Y, E represents a $(-C_6H_4-)_p$ group, wherein p is the number 1, 2 or 3, or the group

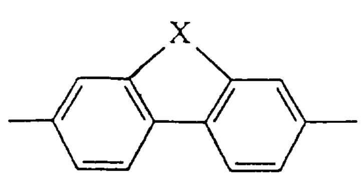

in which

X represents two H atoms or a $-CH_2-$, $-CH_2-CH_2-$ or -O- bridging group,

and which is optionally substituted by at least one sulphonic acid group,

the groups

$R_1$ to $R_4$ may be identical or different and, independently of each other, represent hydrogen or an alkyl, trifluoromethyl, alkoxy, aralkoxy or alkylenoxy group, the NRR' group, where R = R' or hydrogen, R' = a lower alkyl, acyl or sulphonyl group or a heterocyclic 5 or 6-membered ring which is bonded via N or C, halogen, the carboxy, cyano, alkylsulphone, arylsulphone, carbonamide, sulphonamide or carboxylate group, or $R_1$ and $R_2$ or $R_3$ and $R_4$ together represent a fused benzene ring,

m and n, independently of each other, represent the numbers 0, 1 or 2, with the proviso that if m and n are 0, the group E contains at least one sulphonic acid group and wherein the group E may be further substituted.

**2.** Films or foils according to Claim 1, which contain, as organic polymers, polyamides, cellulose acetate, vinylalcohol homo and copolymers or vinylacetate homo and copolymers.

**3.** Films or foils according to Claim 1 which contain, as organic polymers, polyvinylalcohols which have been prepared by complete or partial saponification of polyvinylacetate.

**4.** Films or foils according to Claim 3 with polyvinylalcohols which have a degree of saponification >80 mol% and a viscosity of greater than 4 mPas at 20 °C.

**5.** Films or foils according to Claim 1, which contain, as dyes, those of the formula (II)

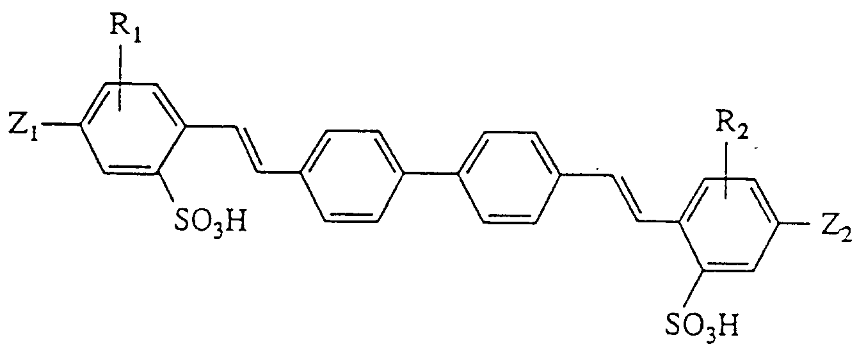

(II)

in which $Z_1$ and $Z_2$, independently of each other, represent a hydrogen atom, the Cl, N-acyl or N-alkyl group, a group bonded via N or the $-C_6H_4SO_3H$ group,

and in which $R_1$ and $R_2$ may be identical or different, and, independently of each other, represent hydrogen, an alkyl, trifluoromethyl, alkoxy, aralkoxy, alkenoxy group, the group NR'R in which R represents the group R' or hydrogen and R', optionally together with R, represents a heterocyclic 5 or 6 membered ring, halogen, the carboxy, cyano, alkylsulphone, arylsulphone, carbonamide, sulphonamide or carboxylate group.

**6.** Films or foils according to Claim 1, which contain 0.005 to 5 wt.%, with reference to 100 wt.% of film, of dye as mentioned in Claim 1.

**7.** Films or foils according to Claim 1, which are stretched 300 to 1,000% at a temperature between 60 and 180 °C.

**8.** Use of the films or foils according to Claims 1 to 7 as polarising filters.

**9.** Use of the dyes which, in the form of the free acid, correspond to the general formula (I) in Claim 1, in which $R_1$ to $R_4$, E, G, X, Y, n and m have the same meaning as given in Claim 1, as dichroic chromophores.

**10.** Dyes of the general formula (I)

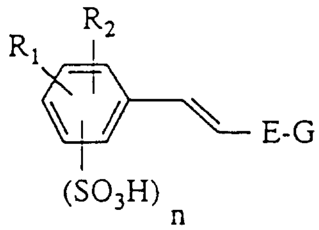

(I)

in which

G represents a group Y

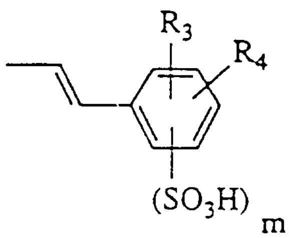

(Y)

$R_1$, $R_2$, $R_3$ and $R_4$, independently of each other, represent the group NRR' or hydrogen, at least two of the groups $R_1$, $R_2$, $R_3$ and $R_4$, however, representing the group NRR', in which R = R' or hydrogen and R' represents an acyl or alkyl group, and m, n and E have the meaning given in Claim 1 for formula (I).

**Revendications**

**1.** Films ou feuilles polarisant la lumière, contenant des polymères organiques solubles dans l'eau et un ou plusieurs colorants correspondant, sous forme d'acides libres, à la formule générale (I)

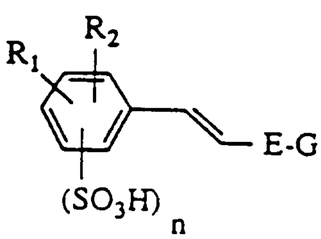

(I)

dans laquelle

G représente un atome d'hydrogène ou le radical Y

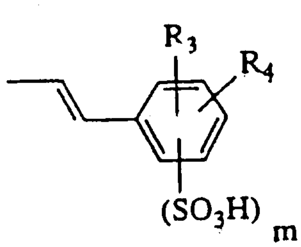

(Y)

et dans laquelle,
si G représente de l'hydrogène, E représente un radical aromatique éventuellement substitué,
si G représente le radical Y, E représente un radical ($-C_6H_4-)_p$, dans lequel p a l'une des valeurs 1, 2 ou 3 de ou représente le groupe

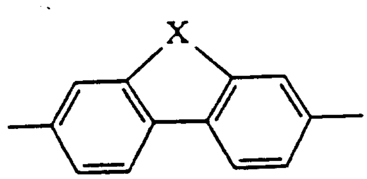

dans lequel
X représente deux atomes d'hydrogène ou un radical de jonction $-CH_2-$, $-CH_2-CH_2-$ ou -O-, et est éventuellement substitué par au moins un groupe d'acide sulfonique,
les radicaux $R_1$ à $R_4$ représentent, indépendamment les uns des autres et de manière identique ou différente, un atome d'hydrogène ou un radical alkyle, trifluorométhyle, alcoxy, aralcoxy, alcényloxy, les groupes NRR' avec R = R' ou de l'hydrogène, R' = un alkyle inférieur, un acyle, un sulfonyle ou un hétérocycle à 5 ou 6 éléments liés par un N ou un C, un halogène, les groupes carboxy, cyano, alkylsulfone, arylsulfone, carbonamide, sulfonamide ou ester d'un acide carboxylique, ou $R_1$ et $R_2$ ou bien $R_3$ et $R_4$ représentent ensemble un cycle benzénique en forme d'anneau,
m et n représentent, indépendamment l'un de l'autre, les nombres O, 1 ou 2 avec, pour condition, que si m et n représentent 0, le radical E contient au moins un groupe d'acide sulfonique, et dans lequel le radical E peut être substitué davantage.

**2.** Films ou feuilles selon la revendication 1, qui contiennent comme polymère organique des polyamides, de l'acétate de cellulose, des homo- et copolymères d'alcool vinylique ou des homo- et copolymères d'acétate de vinyle.

**3.** Films ou feuilles selon la revendication 1, qui contiennent comme polymère organique des alcools polyvinyliques, qui ont été préparés par saponification partielle ou complète de l'acétate de polyvinyle.

**4.** Films ou feuilles selon la revendication 3, avec des alcools polyvinyliques qui présentent un degré de saponification >80% molaires et une viscosité supérieure à 4 mPa.s à 20°C.

**5.** Films ou feuilles selon la revendication 1, qui contiennent comme colorants ceux de la formule (II)

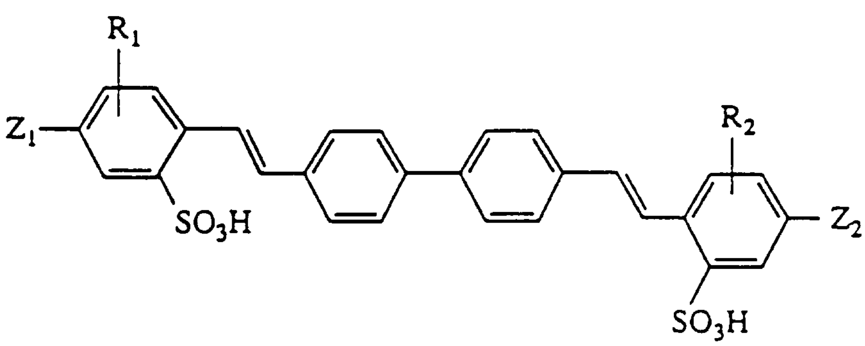

(II)

dans laquelle $Z_1$, $Z_2$ représentent, indépendamment l'un de l'autre, un atome d'hydrogène, le radical Cl, N-acyle, N-alkyle, un radical lié par un N ou le groupe $-C_6H_4SO_3H$;
et dans laquelle $R_1$, $R_2$ représentent, indépendamment l'un de l'autre et de manière identique ou différente, un atome d'hydrogène ou un groupe alkyle, trifluorométhyle, alcoxy, aralcoxy, alcényloxy, le groupe NRR' dans lequel R = R' ou de l'hydrogène et R' éventuellement aussi avec R, un hétérocycle à 5 ou 6 éléments, un halogène, les groupes de carboxy, cyano, alkylsulfone, arylsulfone, carbonamide, sulfonamide ou ester d'un acide carboxylique.

**6.** Films ou feuilles selon la revendication 1, qui contiennent de 0,005 à 5% en poids de colorant, tel que mentionné dans la revendication 1, rapportés à 100% en poids de poids du film.

**7.** Films ou feuilles selon la revendication 1, qui sont étirés de 300 à 1000% à une température entre 60 et 180 ° C.

**8.** Utilisation des films ou feuilles selon les revendications 1 à 7, comme filtres polarisants.

**9.** Utilisation des colorants ayant, sous forme d'acides libres, la formule générale (I) selon la revendication 1, dans laquelle $R_1$ à $R_4$ ,E, G, X, Y, n et m ont les significations indiquées dans la revendication 1 comme chromophores dichroïques.

**10.** Colorants de formule générale (I)

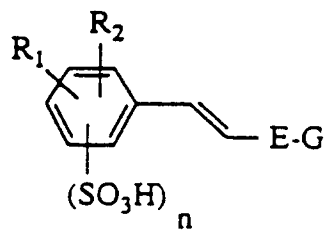

(I)

dans laquelle
G représente un radical Y

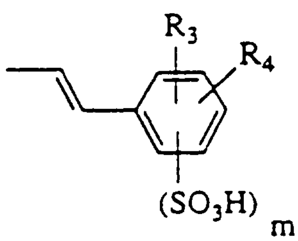

(Y)

$R_1$, $R_2$, $R_3$ et $R_4$ représentent, indépendamment les uns des autres, le radical NRR' ou de l'hydrogène, au moins deux des radicaux $R_1$, $R_2$, $R_3$ et $R_4$ représentent cependant le radical NRR', dans lequel R = R', ou représente de l'hydrogène, et R' représente un radical acyle ou alkyle, et
m, n et E ont les significations indiquées pour la formule (I) dans la revendication 1.